# EUROPEAN PATENT APPLICATION

(11) **EP 4 682 278 A1**
(43) Date of publication of application: **21.01.2026**
(21) Application number: 24774457.6
(22) Date of filing: 31.01.2024
(51) Int. Cl.: C22C 21/00, B22F 10/25, B22F 10/28, B22F 10/34, B22F 10/64

(54) **ALUMINUM ALLOY MOLDED BODY AND METHOD FOR PRODUCING SAME**

(30) Priority: 17.03.2023 JP 2023043032
(71) Applicant: Nippon Light Metal Company, Ltd., Tokyo 105-0004 (JP); Nikkeikin Aluminium Core Technology Company, Ltd., Tokyo 105-8681 (JP); Toyo Aluminium Kabushiki Kaisha, Osaka-shi, Osaka 541-0056 (JP)
(72) Inventor: YATSUKURA, Masato, Tokyo 105-8681 (JP); NAGAO, Takashi, Shizuoka-shi, Shizuoka 421-3203 (JP); TASHIRO, Tsuguharu, Shizuoka-shi, Shizuoka 421-3203 (JP); KUSUI, Jun, Osaka-shi Osaka 541-0056 (JP); MURAKAMI, Isao, Osaka-shi Osaka 541-0056 (JP)
(74) Representative: Mewburn Ellis LLP
(86) International application number: PCT/JP2024/003069
(87) International publication number: WO 2024/195311

(57) **Abstract**

The present invention provides: an aluminum alloy molded body which exhibits excellent moldability, thermal stability and strength at normal temperature; and a method for producing same. More specifically, the present invention provides: an aluminum alloy laminated molded body which can suppress residual stress, which causes cracks at the time of molding, and which exhibits high hardness at room temperature and in a high temperature environment at 250°C; and a simple and efficient method for producing the aluminum alloy laminated molded body. This aluminum alloy molded body is formed using a lamination molding method, and is characterized by: comprising an aluminum alloy which contains more than 2.0 mass% and not more than 5.0 mass% of Fe, more than 2.0 mass% and not more than 5.0 mass% of Mn and more than 0 mass% and not more than 1.5 mass% of Zr, with the remainder comprising Al and unavoidable impurities; the total content of Fe and Mn being 4.0-7.0 mass%; and having a metallographic structure comprising a matrix phase (Al), an AlFeMn-based compound and an AlZr-based compound.

## Description

### TECHNICAL FIELD

The present invention relates to an aluminum alloy molded body and a method for producing the same, and more specifically, relates to an aluminum alloy laminated molded body that can be suitably used as a member that is required to have excellent thermal stability and a simple and efficient production method therefor.

### PRIOR ATRS

Al-Fe-based aluminum alloys have high specific strength and excellent thermal conductivity, and in addition thereto have good recyclability, so they are expected to be used in a wide range of applications, including transportation equipment such as electric vehicles and aircrafts, and heat sink materials for LED lighting and various types of electronic electric equipment.

Under such circumstances, various studies have been made to improve the strength and thermal conductivity of the Al-Fe-based aluminum alloys. For example, in Patent Literature 1 (Japanese Unexamined Patent Publication No. 2013-204087), there are disclosed an aluminum alloy member having high strength such that the tensile strength is 200 MPa or more at room temperature and a thermal conductivity of 145 W/K·m or more is characterized in that it includes 8% by mass (hereinafter %) < Si <11%, 0.2% < Mg <0.3%, 0.3% < Fe <0.7%, 0.15% < Mn <0.35%, 1 < Fe + Mn × 2, 0.005% < Sr <0.020%, Cu <0.2%, Zn <0.2%, and balance being Al and unavoidable impurities, and that it is kept at 200°C < T < 250°C for 0.1 to 1 hour after casting, and a production method therefor.

In the aluminum alloy member and the production method therefor described in Patent Literature 1, it is said that it has been found that the member shows the tensile strength at room temperature of as high as 200 MPa or more and the thermal conductivity of as high as 145 W/mK or more by ensuring the fluidity and improving the seizure prevention by optimizing the alloy composition containing impurities, and by shortening the heat treatment time by improving the thermal conductivity due to eutectic Si granulation after casting.

Further, in Patent Literature 2 (Japanese Unexamined Patent Publication No. 2015-127449), there is disclosed an aluminum alloy sheet material for high molding comprises, by % by mass, Si: 0.15% or less, Fe: 1.00 to 1.60%, Ti: 0.005 to 0.02%, Zr: 0.0005 to 0.03%, and optionally Mn: 0.01 to 0.50%, with the balance being Al and unavoidable impurities, and has the average crystal grain size of 25 µm or less.

In the aluminum alloy sheet material for high molding described in Patent Literature 2, it is said that, since the average crystal grain size is 25 µm or less with the contents of Si, Fe, Ti, and Zr in the preferable ranges, it is possible to obtain an aluminum alloy sheet material for high molding having high elongation value and excellent high formability, and in addition, with necessary tensile strength and proof stress and also excellent thermal conductivity.

Further, in Patent Literature 3 (Japanese Unexamined Patent Publication No. 2020-33598), there is disclosed an Al-Fe-Er-based aluminum alloy characterized in that it contains Fe and Er, the balance being Al and unavoidable impurities, wherein Fe is about 5% by weight to about 15% by weight, and Er is about 0.2% by weight to about 1.2% by weight.

In the Al-Fe-Er-based aluminum alloy described in Patent Literature 3, it is said that, when adding about 0.2% by weight to about 1.2% by weight of Er, there is an effect that the impurities are removed and Al is used to form an L12 precipitate and to improve the quality of the melt by enhancing the effect of promoting precipitation. As a result, it is possible to provide an Al-Fe-Er-based aluminum alloy having excellent thermal stability and plasticity.

### CITATION LIST

### Patent Literature

Patent Literature 1: Japanese Patent Unexamined Publication No. 2013-204087
Patent Literature 2: Japanese Patent Unexamined Publication No. 2015-127449
Patent Literature 3: Japanese Patent Unexamined Publication No. 2020-33598

### Summary of the Invention

### Technical Problem

The members made of the Al-Fe-based aluminum alloys are often used in a high temperature state, and the Al-Fe-based aluminum alloys are also expected to have thermal stability. However, thermal stability is not taken into consideration in the aluminum alloy member of Patent Literature 1 and the aluminum alloy sheet material for high molding of Patent Literature 2. In addition, it is difficult to say that the strength and hardness of these aluminum alloy members and highly formable aluminum alloy sheets at room temperature are sufficient.

Further, although the Al-Fe-Er-based aluminum alloy described in Patent Literature 3 has one of the purposes of imparting thermal stability, in addition to being expensive due to the addition of Er, which is a rare earth element, the recyclability of the Al-Fe-based aluminum alloy is also reduced.

Furthermore, in the laser lamination molding method of the Al-Fe-based aluminum alloys, when the Fe content increases, a large number of coarse AlFe-based compounds crystallize in the vicinity of the melt pool boundary, and at the same time, residual stress in the molten solidification region increases, which results in significant cracking during the molding, and making it difficult to obtain a good aluminum alloy laminated molded body.

In view of the above problems in the prior art, an object of the present invention is to provide an aluminum alloy molded body that exhibits excellent moldability, thermal stability and strength at normal temperature, and to provide a production method for the same. More specifically, the present invention provides an aluminum alloy laminate molded body that suppresses residual stress that causes cracks during molding and exhibits high hardness at room temperature and in high-temperature environments of about 250°C, as well as a simple and efficient method for producing the same.

### Solution to Problem

As a result of the intensive study on an aluminum alloy molded body and a method for producing the same in order to achieve the above object, the present inventors have found that it is extremely effective to set the Fe content to more than 2.0% by mass and not more than 5.0% by mass, while adding appropriate amounts of Mn and Zr, and the like, and have reached the present invention.

That is, the present invention provides
an aluminum alloy molded body molded by a lamination molding method, and
the aluminum alloy molded body is characterized by: comprising an aluminum alloy which contains:
   Fe: more than 2.0% by mass and not more than 5.0% by mass;
   Mn: more than 2.0% by mass and not more than 5.0% by mass;
   Zr: more than 0% by mass and not more than 1.5% by mass;
   with the remainder being Al and unavoidable impurities;
   the total content of Fe and Mn being 4.0 to 7.0% by mass; and
   having a metallographic structure comprising a matrix phase (Al), an AlFeMn-based compound and an AlZr-based compound.

In the aluminum alloy molded body of the present invention, when the Fe content exceeds 2.0% by mass and the Mn content exceeds 2.0% by mass, it is possible to make the hardness at 250°C to 80 HV or more.

When quenching and solidifying an aluminum alloy material containing more than 2.0% by mass of Fe and more than 2.0% by mass of Mn by the lamination molding method, a large amount of fine AlFeMn-based compounds are dispersed in the aluminum alloy molded body of the present invention. As a result, the movement of dislocations is suppressed and the effect is maintained up to a high temperature, so that the aluminum alloy molded body of the present invention has little deterioration in mechanical properties at a high temperature and has excellent thermal stability.

Further, by setting the total content of Fe and Mn to 7.0% by mass or less, the generation of excessive crystallization of the AlFeMn-based compounds in the boundary region of the melt pool can be suppressed, the residual stress in the molten solidification region can be reduced, and the cracks that occur during the lamination molding can be effectively suppressed. As a result, an aluminum alloy molded body in which defects such as cracks are suppressed can be obtained. On the other hand, by setting the total content of Fe and Mn to 4.0% by mass or more, it is possible to impart high hardness at room temperature and high hardness at high temperature to the aluminum alloy molded body.

The aluminum alloy molded body of the present invention is a joint body of tiny molten solidification regions, and by setting the total content of Fe and Mn to 7.0% by mass or less, the residual stress in the molten solidification region of the aluminum alloy material is 350 MPa or less, and the cracks that occur during the lamination molding can be effectively suppressed. As a result, it is possible to obtain an aluminum alloy molded body having a high relative density of 99.5% or more and suppressing defects such as cracks. From the viewpoint of more reliably suppressing cracks that occur during the lamination molding, it is more preferable that the residual stress in the molten solidification region of the aluminum alloy material is 250 MPa or less.

Further, the aluminum alloy molded body of the present invention contains more than 0% by mass and not more than 1.5% by mass of Zr. By containing more than 0% by mass and not more than 1.5% by mass of Zr, it is possible to finely precipitate an AlZr-based compound, and compared to a case in which Zr is not added, it is possible to maintain a high value of hardness at room temperature even after the heat treatment that is carried out in order to reduce residual stress.

Further, in the aluminum alloy molded body of the present invention, it is preferable that a Vickers hardness at 250°C is 80 HV or more. When having the Vickers hardness of 80 HV or more at 250°C, it can be suitably used for applications such as engine pistons, turbo impellers and heat sink materials that are maintained at a high temperature. Here, more preferable hardness at 250°C is 90 HV or more, and the most preferable hardness is 100 HV or more.

Further, it is preferable that the aluminum alloy molded body of the present invention has a Vickers hardness at room temperature of 120 HV or more. By setting a Vickers hardness of the aluminum alloy molded body to 120 HV or more at room temperature, it is possible to use in applications where high stress is applied or where excellent wear resistance is required, and the like. The Vickers hardness at room temperature is more preferably 130 HV or more, most preferably 140 HV or more.

Furthermore, in the aluminum alloy molded body of the present invention, it is preferable that the average spacing between the AlFeMn-based compounds in the region excluding the melt pool boundary portion is 200 nm or less. When the average spacing between the AlFeMn-based compounds is 200 nm or less, the movement of dislocations can be efficiently inhibited, and good thermal stability can be imparted to the aluminum alloy molded body. Further, though the coarse AlFeMn-based compounds exhibit brittle properties to cause the decrease in the toughness and ductility of the aluminum alloy molded body, it is possible to suppress these adverse effects by optimizing the total content of Fe and Mn.

Further, since the aluminum alloy molded body of the present invention is obtained by the lamination molding method and is formed by joining many quenched and solidified regions, in the molded body, as a whole, the distribution of the elements is more uniform than that of a casting or the like. As a result, extremely fine AlFeMn-based compounds and AlZr-based compounds are uniformly dispersed in a large amount throughout the aluminum alloy molded body.

Examples of the unavoidable impurities in the aluminum alloy molded body of the present invention include Si, Cu, Mg, Zn, Cr and Ti.

Further, the present invention also provides a method for producing an aluminum alloy molded body, which is characterized by including,
a lamination molding step of molding an aluminum alloy material by a lamination molding method to obtain an aluminum alloy laminated molded body; and
a heat treatment step of holding the aluminum alloy laminated molded body at 300 to 400°C to reduce residual stress,
wherein the aluminum alloy material contains:
   Fe: more than 2.0% by mass and not more than 5.0% by mass;
   Mn: more than 2.0% by mass and not more than 5.0% by mass;
   Zr: more than 0% by mass and not more than 1.5% by mass;
   with the remainder being Al and unavoidable impurities; and
   the total content of Fe and Mn being 4.0 to 7.0% by mass.

The production method for the aluminum alloy molded body of the present invention uses the lamination molding method, and when the raw aluminum alloy material has the Fe content of more than 2.0% by mass and the Mn content of more than 2.0% by mass, it is possible to obtain the aluminum alloy molded body having a hardness of 80 HV or more at 250°C.

When molding an aluminum alloy material containing more than 2.0% by mass of Fe and more than 2.0% by mass of Mn by a lamination molding method, a quenched and solidified structure mainly made of AlFeMn-based compounds and an aluminum base material is formed, and then when maintaining the temperature at 300 to 400°C, it is possible to sufficiently reduce the residual stress which has been accumulated during the molding. Further, when setting the heat treatment temperature to 400°C or lower, it is possible to suppress coarsening of the AlFeMn-based compound and AlZr-based compound and prevent reducing of mechanical properties such as Vickers hardness of the aluminum alloy molded body.

Further, by setting the total content of Fe and Mn of the aluminum alloy material to 7.0% by mass or less, it is possible to suppress the formation of a large amount of crystallized product in the boundary region of the melt pool, to reduce the residual stress in the molten solidification region, thereby to effectively suppress the cracks that occur during lamination molding. As a result, the aluminum alloy molded body in which defects such as cracks are suppressed can be obtained simply and efficiently. On the other hand, by setting the total content of Fe and Mn to 4.0% by mass or more, it is possible to impart high hardness at room temperature and high hardness at high temperature to the aluminum alloy molded body.

Furthermore, by containing more than 0% by mass and not more than 1.5% by mass of Zr in the aluminum alloy material, it is possible to finely precipitate an AlZr-based compound, an compared to a case in which Zr is not added, it is possible to maintain a high value of hardness at room temperature of the aluminum alloy molded body even after the heat treatment that is carried out in order to reduce residual stress.

The shape and size of the aluminum alloy material may be appropriately selected according to the lamination molding method to be used, and a powdered aluminum alloy material or a wire-shaped aluminum alloy material can be preferably used.

Further, the lamination molding method is not particularly limited as long as the effect of the present invention is not impaired, and various conventionally known lamination molding methods can be used. The lamination molding method is a method capable of obtaining a molded body having a desired shape by depositing a raw metal, and examples thereof include a powder bed melt-bonding method and a directed energy deposition method. Further, the heat source for melting the raw metal is not particularly limited as long as the effect of the present invention is not impaired, and various conventionally known heat sources can be used, and for example, a laser or an electron beam can be preferably used.

### Effects of the invention

According to the present invention, it is possible to provide an aluminum alloy molded body that exhibits excellent moldability, thermal stability and strength at normal temperature, and to provide a production method for the same. More specifically, the present invention can provide an aluminum alloy laminate molded body that suppresses residual stress that causes cracks during molding and exhibits high hardness at room temperature and in high-temperature environments of about 250°C, as well as a simple and efficient method for producing the same.

### Brief Explanation of the Drawings

FIG. 1 is a schematic diagram of the cross-sectional macrostructure of the aluminum alloy molded body of the present invention.
FIG. 2 is a schematic diagram of the laser irradiation pattern in the examples.
FIG. 3 is a photograph of the appearance of the aluminum alloy molded body having the composition of Comparative Example 4.
FIG. 4 is a graph showing the relationship between the total content of Fe and Mn and the residual stress in the molten solidification portion of the aluminum alloy.
FIG. 5 is a graph showing the relationship between the total content of Fe and Mn and the hardness at 250°C of the molten solidification portion of the aluminum alloy.
FIG. 6 is a graph showing the relationship between the total content of Fe and Mn and the hardness at room temperature of the molten solidification portion of the aluminum alloy.
FIG. 7 is the microstructure of the melt pool center of the molten solidification portion (not heat-treated) having the composition of Example 2.
FIG. 8 is the microstructure of the melt pool boundary of the molten solidification portion (not heat-treated) having the composition of Example 2.
FIG. 9 is the EDS spectrum and measurement points obtained from the melt pool center of the molten solidified portion (not heat-treated) having the composition of Example 2.
FIG. 10 is the EDS spectrum and measurement points obtained from the melt pool boundary of the molten solidified portion (not heat-treated) having the composition of Example 2.
FIG. 11 is the microstructure of the melt pool center of the molten solidification portion (after heat treatment at 400°C for 1 hour) having the composition of Example 2.
FIG. 12 is the microstructure of the melt pool boundary of the molten solidification portion (after heat treatment at 400°C for 1 hour) having the composition of Example 2.
FIG. 13 is the EDS spectrum and measurement points obtained from the melt pool center of the molten solidified portion (after heat treatment at 400°C for 1 hour) having the composition of Example 2.
FIG. 14 is the EDS spectrum and measurement points obtained from the melt pool boundary of the molten solidified portion (after heat treatment at 400°C for 1 hour) having the composition of Example 2.

### Embodiments for achieving the invention

Hereinafter, representative embodiments of the aluminum alloy molded body, and the production method therefor according to the present invention will be described in detail with reference to the drawings, but the present invention is not limited to only these examples. Further, the elements in the embodiment can be optionally combined with a part or the whole. In the following description, the same or equivalent parts are denoted by the same numerals, and there is a case that redundant explanation may be omitted. In addition, since the drawings are for conceptually explaining the present invention, dimensions of the respective constituent elements expressed and ratios thereof may be different from actual ones.

### 1. Aluminum alloy molded body

The aluminum alloy molded body of the present invention is an aluminum alloy laminated molded body molded by the lamination molding method, and is characterized in that the Fe and Mn contents are specified mainly from the standpoints of high-temperature hardness, room-temperature hardness, and moldability, and that a trace amount of Zr is added. Hereinafter, the composition, structure and various physical properties of the aluminum alloy molded body will be described in detail.

### (1) Composition

The aluminum alloy molded body of the present invention is made from an aluminum alloy material containing Fe, Mn and Zr, with the remainder being Al and unavoidable impurities, as the raw material. Hereinafter, each of the component elements will be described.

### (1-1) Essential additive elements

Fe: more than 2.0% by mass and not more than 5.0% by mass
By containing more than 2.0% by mass of Fe together with Mn, it is possible to increase the hardness of the aluminum alloy body and improve the thermal stability through the formation of the AlFeMn-based compound. Here, from the viewpoint of suppressing the decrease in toughness and ductility of the aluminum alloy molded body caused by excessive crystallization of the AlFeMn-based compound in the boundary region of the melt pool, the Fe content is preferably 5.0% by mass or less, and more preferably 3.0% by mass or less.

Mn: more than 2.0% by mass and not more than 5.0% by mass
By containing more than 2.0% by mass of Mn together with Fe, it is possible to increase the hardness of the aluminum alloy body and improve the thermal stability through the formation of the AlFeMn-based compound. Here, from the viewpoint of suppressing the decrease in toughness and ductility of the aluminum alloy molded body caused by excessive crystallization of the AlFeMn-based compound in the boundary region of the melt pool, the Mn content is preferably 5.0% by mass or less.

Total content of Fe and Mn: 4.0 to 7.0% by mass
By containing Fe and Mn, it is possible to increase the hardness of the aluminum alloy molded body and improve the thermal stability through the formation of the AlFeMn-based compound. Here, by setting the total content of Fe and Mn to 7.0% by mass or less, the excessive crystallization of the AlFeMn-based compounds in the boundary region of the melt pool can be suppressed, and the residual stress in the molten solidification region can be set to 350 MPa or less. On the other hand, by setting the total content of Fe and Mn to 4.0% by mass or more, it is possible to impart high hardness at room temperature and high hardness at high temperature to the aluminum alloy molded body. The total content of Fe and Mn is preferably 4.5 to 6.5% by mass, more preferably 5.0 to 6.0% by mass.

Zr: more than 0% by mass to not more than 1.5% by mass
By containing 1.5 % by mass or less of Zr, it is possible to finely precipitate the AlZr-based compound, and the hardness at room temperature can be maintained even after the heat treatment. The content of Zr is preferably 0.1% by mass to 1.5% by mass, more preferably 0.3% by mass to 1.5% by mass.

### (1-2) Unavoidable impurities

Examples of the unavoidable impurities in the aluminum alloy molded body of the present invention include Si, Cu, Mg, Zn, Cr and Ti.

### (2) Structure

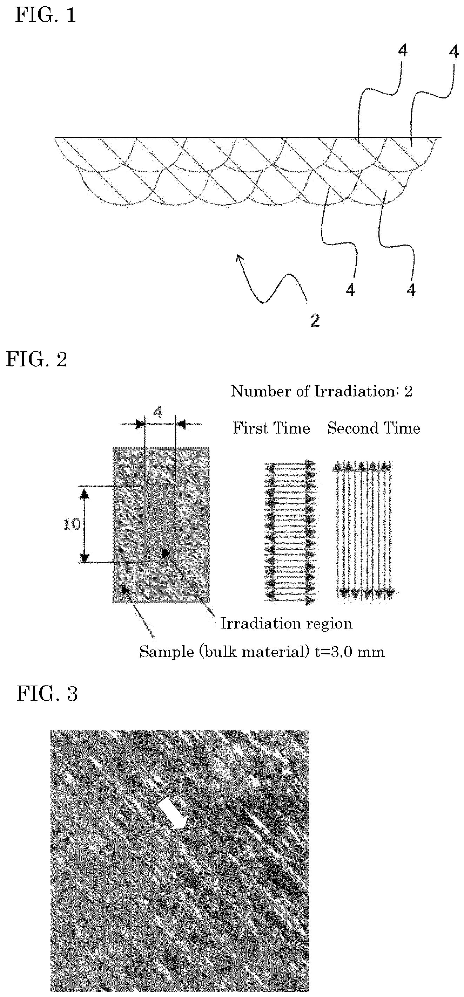

FIG. 1 schematically shows the cross-sectional macrostructure of the aluminum alloy molded body of the present invention. The aluminum alloy molded body 2 of the present invention is formed by the lamination molding method, and has a macrostructure in which a plurality of melt pools 4 is joined.

The number of melt pools 4 in the vertical and horizontal directions of the aluminum alloy molded body 2 is not particularly limited as long as the effect of the present invention is not impaired, and the aluminum alloy molded body 2 may be appropriately adjusted to have a desired size and shape.

Further, the size and shape of the melt pool 4 are not particularly limited, but as the melt pool 4 becomes larger, the cooling rate at the time of solidification decreases. That is, from the viewpoint of refining the crystal grains of the aluminum alloy molded body 2 and miniaturizing the AlFeMn-based compound, it is preferable to reduce the size of the melt pool 4 so that the cooling rate increases. Further, reduction of the size of the melt pool 4 itself can increase the strength of the aluminum alloy molded body 2 and homogenize the aluminum alloy molded body 2. On the other hand, when the melt pool 4 is made too small, the number of melt pools 4 required for forming the aluminum alloy molded body 2 increases, and therefore, from the viewpoint of production efficiency, it is preferable to increase the size of the melt pool 4, as long as the AlFeMn-based compound is sufficiently miniaturized.

A large amount of fine AlFeMn-based compounds and AlZr-based compounds are dispersed inside the melt pool 4 to suppress the movement of dislocations, and this effect is maintained up to a high temperature. As a result, the aluminum alloy molded body of the present invention not only exhibits the high hardness at room temperature, but also exhibits little deterioration in mechanical properties at a high temperature and has excellent thermal stability.

Here, it is preferable that the average spacing between the AlFeMn-based compounds in the region excluding the melt pool boundary portion is 200 nm or less. By setting the average spacing between the AlFeMn-based compounds is 200 nm or less, the movement of dislocations is effectively suppressed, and this effect is maintained up to a high temperature. As a result, in addition to obtaining high hardness at room temperature, since the deterioration of mechanical properties at a high temperature is suppressed, the excellent thermal stability can be imparted to the aluminum alloy molded body of the present invention. Here, the boundary region of the melt pool means a region up to 5 µm away from the boundary of the melt pool.

The method for determining the distance between the AlFeMn-based compounds is not particularly limited as long as the effect of the present invention is not impaired, and various conventionally known methods may be used for measurement. For example, the distance can be obtained by cutting the aluminum alloy molded body 2 at an arbitrary cross section, observing the obtained cross-sectional sample with a scanning electron microscope, and then calculating the average value of the distance of the AlFeMn-based compound inside the melt pool 4. Further, depending on the observation method, the cross-sectional sample may be subjected to mechanical polishing, buffing, electrolytic polishing, etching or the like.

### (3) Physical Properties

It is preferable that the residual stress of the aluminum alloy molded body 2 is as low as possible. By setting the residual stress to 350 MPa or less, the cracks that occur during lamination molding can be effectively suppressed, and by setting it to 250 MPa or less, the cracks can be more reliably suppressed. As a result, it is possible to obtain the aluminum alloy molded body 2 in which defects such as cracks are suppressed. Further, by setting the residual stress to 100 MPa or less, it is possible to improve the reliability of the aluminum alloy molded body 2.

It is preferable that a Vickers hardness at 250°C of the aluminum alloy molded body 2 is 80 HV or more. When having the Vickers hardness of 80 HV or more at 250°C, it can be suitably used for applications such as engine pistons, turbo impellers and heat sink materials that are maintained at a high temperature. Here, more preferable hardness at 250°C is 90 HV or more, and the most preferable hardness is 100 HV or more.

Further, it is preferable that the aluminum alloy molded body 2 has a Vickers hardness at room temperature of 120 HV or more. By setting a Vickers hardness of the aluminum alloy molded body 2 to 120 HV or more at room temperature, it is possible to use in applications where high stress is applied or where excellent wear resistance is required, and the like. The Vickers hardness of the aluminum alloy molded body 2 at room temperature is more preferably 130 HV or more, most preferably 140 HV or more.

### 2. Method for producing the aluminum alloy molded body

The method for producing the aluminum alloy molded body includes the lamination molding step of using the aluminum alloy material containing appropriate amounts of Fe and Mn and a trace amount of Zr, with the remainder being Al and unavoidable impurities as a raw material to obtain the aluminum alloy laminated molded body by the lamination molding method, and the heat treatment step of reducing residual stress. Hereinafter, each step will be described in detail.

### (1) Lamination molding step

The lamination molding step is a step of using the aluminum alloy material containing more than 2.0% by mass and not more than 5.0% by mass of Fe, more than 2.0% by mass and not more than 5.0% by mass of Mn, and more than 0% by mass and not more than 1.5% by mass of Zr, with the remainder being Al and unavoidable impurities as a raw material and obtaining the aluminum alloy laminated molded body by the lamination molding method.

The lamination molding method is a method of stacking and processing molten solidification regions one by one based on two-dimensional (slice) data obtained from 3D-CAD data. In the method for producing the aluminum alloy molded body of the present invention, for example, an aluminum alloy powder is used as a raw material, and the deposited metal powder is melt-solidified by irradiation with a laser or the like and laminated by one layer to give a three-dimensional molded body.

Here, when the aluminum alloy material has a high Fe content and becomes hypereutectic, the cracks are more likely to occur during the lamination molding, but, by adding Mn as a substitute for Fe, the cracks during the lamination molding can be effectively suppressed.

The lamination molding method is not particularly limited as long as the effect of the present invention is not impaired, and various conventionally known lamination molding methods can be used. Further, the heat source for melting the raw metal is not particularly limited as long as the effect of the present invention is not impaired, and various conventionally known heat sources can be used, and for example, a laser or an electron beam can be preferably used.

Here, since aluminum is difficult to absorb a laser and heat is easily diffused due to its high thermal conductivity, it is difficult to obtain an aluminum alloy molded body having a high density by the lamination molding method. Therefore, in order to increase the density of the aluminum alloy molded body 2, it is preferable to use a laser having a short wavelength, and for example, a Yb fiber laser can be suitably used.

### (2) Heat treatment step

The heat treatment step is a step for heat-treating the aluminum alloy laminated molded body obtained by using the lamination molding method at an appropriate temperature to precipitate the AlFeMn-based compounds and the AlZr-based compounds, and at the same time, to reduce residual stress.

When molding an aluminum alloy material containing Fe and Mn by the lamination molding method, the quenched and solidified structure mainly made of the AlFeMn-based compound and the aluminum base material is formed. After that, when maintaining the aluminum alloy laminated molded body at 300 to 400°C, it is possible to precipitate the AlFeMn-based compound and the AlZr-based compound, and to reduce the residual stress accumulated during the molding. The holding time may be appropriately adjusted according to the size and shape of the aluminum alloy laminated molded body, and is preferably 1 to 4 hours.

When setting the heat treatment temperature to 300°C or higher, it is possible to set the residual stress to 100 MPa or less. As a result, it is possible to improve the fatigue characteristics, and the like, of the aluminum alloy laminated molded body to impart high reliability to the aluminum alloy laminated molded body. Further, when setting the heat treatment temperature to 400°C or lower, it is possible to suppress coarsening of the AlFeMn-based compound and the AlZr-based compound, and prevent reducing of mechanical properties such as Vickers hardness of the aluminum alloy molded body 2. The more preferable heat treatment temperature is 300 to 350°C.

Although the typical embodiments of the present invention have been described above, the present invention is not limited to these, and various design changes are possible, and all of these design changes are included in the technical scope of the present invention.

### EXAMPLE

### <Examples>

By irradiating a laser onto the surface of an aluminum alloy bulk material having the composition of Example 1 to Example 5 shown in Table 1 to form a quenched and solidified structure (molten solidification portion of the aluminum alloy), an evaluation was carried out of the aluminum alloy lamination molding body when the aluminum alloy having each composition was used as a raw material. For the irradiation, an Yb fiber laser equipped on LUMEX Avance-25 molding machine available from Matsuura Machinery Works was used, with a laser output: 440 W, spot diameter: 0.10 mm, scanning speed: 1300 mm/s, scanning pitch: 0.14 mm, atmosphere: an inert gas.

The irradiation pattern is shown in FIG. 2. After placing the aluminum alloy bulk material in the modeling area (table), the oxygen concentration in the modeling area was reduced to about 0.1%, and the first laser irradiation was performed. Next, after cooling for 1 minute, a second laser irradiation was performed. Here, the first and second laser irradiations were performed at the same table height.

Further, Table 1 also shows the total content of Fe and Mn. In all of the present examples, the Fe content is more than 2.0% by mass and not more than 5 % by mass, the Mn content is more than 2.0% by mass and not more than 5.0% by mass, the Zr content is more than 0% by mass and not more than 1.5% by mass, and the total of the Fe content and the Mn content is within the range of 4.0 to 7.0% by mass.

**[Table 1]**

| | Fe (wt%) | Mn (wt%) | Zr (wt%) | Al | Fe+Mn (wt%) |
|---|---|---|---|---|---|
| Ex. 1 | 2.53 | 2.86 | 0.55 | bal. | 5.39 |
| Ex. 2 | 2.61 | 2.77 | 1.14 | bal. | 5.38 |
| Ex. 3 | 2.31 | 4.47 | 0.59 | bal. | 6.78 |
| Ex. 4 | 2.15 | 4.30 | 0.74 | bal. | 6.45 |
| Ex. 5 | 2.78 | 4.22 | 0.95 | bal. | 7.00 |
| Com. Ex. 1 | 0.07 | 3.11 | 1.02 | bal. | 3.18 |
| Com. Ex. 2 | 1.21 | 3.16 | 1.05 | bal. | 4.37 |
| Com. Ex. 3 | 2.51 | <0.01 | 1.05 | bal. | 2.51 |
| Com. Ex. 4 | 5.11 | 2.82 | 0.38 | bal. | 7.93 |

### <<Comparative Example>>

A quenched and solidified structure of the aluminum alloy was obtained in the same manner as in the present example, except that the aluminum alloy having the composition shown in Table 1 as Comparative Example 1 to Comparative Example 4 was used. Further, the obtained molten solidification portion of the aluminum alloy was evaluated in the same manner as in the present example. Note that, in Comparative Example 1 and Comparative Example 2, the Fe content is 2.0% by mass or less, and in Comparative Example 3, the Mn content is 2.0% by mass or less. Further, in Comparative Example 4, the Fe content is more than 5.0% by mass, and the total content of Fe and Mn is also more than 7.0% by mass.

In the molten solidification portion of the aluminum alloy having the composition of Comparative Example 4 where, in addition that the total content of Fe and Mn is also more than 7.0% by mass, the Fe content is more than 5.0% by mass, the occurrence of the cracks was observed. FIG. 3 shows a photograph of the appearance of the composition of Comparative Example 4 taken with a microscope, and it can be confirmed that cracks were generated.

### [Evaluation Tests]

### (1) Residual Stress Measurement

The residual stress in the obtained molten solidification portion of the aluminum alloy was measured by using the micro X-ray stress measurement device AutoMate II available from Rigaku Co., Ltd.

### (2) Microstructure

A scanning electron microscope (JSM-7200F available from JEOL) was used to observe the macroscopic structure of the cross section and the AlFeMn-based compound and the AlZr-based compound dispersed in the melt pool. In addition, the composition of the compounds dispersed in the melt pool was analyzed by EDS.

### (3) Vickers Hardness Measurement

The Vickers hardness was measured at room temperature and at 250°C. The hardness at room temperature was measured by using a microhardness tester, with a measurement load of 50 gf and a holding time of 15 s. For each composition, the samples that were not heat-treated and the samples that were heat-treated at 300°C, 350°C, and 400°C for 1 hour were prepared and measured. The high temperature Vickers hardness was measured by using the Nikon QM-2, with a measurement load of 100 gf and a holding time of 10 seconds. The sample was heated at a rate of 20 °C/min, and the measurement was started after the sample was held at the aimed temperature for 5 minutes. Note that, the samples used were subjected to the heat treatment at 250°C for 100 hours as a preheating.

The measured values of the residual stress in the molten solidification portions of the aluminum alloy are shown in Table 2. In all present examples, the residual stress was 350 MPa or less, which means that the cracks during lamination molding were effectively suppressed.

In contrast, in Comparative Example 4, in which the Fe content is more than 5.0% by mass and the total content of Fe and Mn is more than 7.0% by mass, the residual stress is 478 MPa, which is significantly larger than those of Examples 1 to 5. It is clear that in order to reduce the residual stress, it is necessary to reduce the Fe content and set the total content of Fe and Mn to 7.0% by mass or less.

**[Table 2]**

| | Residual Stress | Hardness at room temperature (HV 0.05) | | | | Hardness at 250°C |
|---|---|---|---|---|---|---|
| | (MPa) | Without heat treatment | Heat treatment at 300°C | Heat treatment at 350°C | Heat treatment at 400°C | (HV 0.1) |
| Ex. 1 | 244 | 132 | 151 | 140 | 124 | 91 |
| Ex. 2 | 224 | 128 | 138 | 126 | 137 | 92 |
| Ex. 3 | 318 | 162 | 188 | 162 | 122 | 101 |
| Ex. 4 | 169 | 146 | 139 | 159 | 107 | 89 |
| Ex. 5 | 193 | 143 | 145 | 172 | 165 | 97 |
| Com. Ex. 1 | - | 76 | 77 | 76 | 88 | - |
| Com. Ex. 2 | - | 98 | 103 | 99 | 116 | - |
| Com. Ex. 3 | - | 97 | 105 | 96 | 110 | - |
| Com. Ex. 4 | 478 | 283 | 267 | 228 | 217 | - |

The values of the hardness at room temperature of the molten solidification portions of each aluminum alloy before and after the heat treatment are shown in Table 2. In all of the molten solidification portions of the aluminum alloys having the compositions of the present examples, a value of 120 HV or more was obtained. Further, it is also seen that the hardness at room temperature of the molten solidification portion of the aluminum alloy having the composition of the present example is increased by subjecting to the appropriate heat treatment. In particular, in the case of Example 2 containing 1.14 wt% of Zr, a high hardness at room temperature of 137 HV is exhibited even after the heat treatment at 400°C. On the other hand, each of the hardness of the molten solidification portions of the aluminum alloy having the compositions of Comparative Examples 1 to 3 in which the Fe content is less than 2.0% by mass or the Mn content is less than 2.0% by mass is low of less than 120 HV, regardless of whether or not heat treatment is performed.

The values of the hardness of the molten solidification portions of each aluminum alloy at 250°C are shown in Table 2. In all of the molten solidification portions of the aluminum alloy having the compositions of the present examples, the hardness at 250°C is 80 HV or more. This is considered to be the result of fine AlFeMn-based compounds and AlZr-based compounds being densely dispersed.

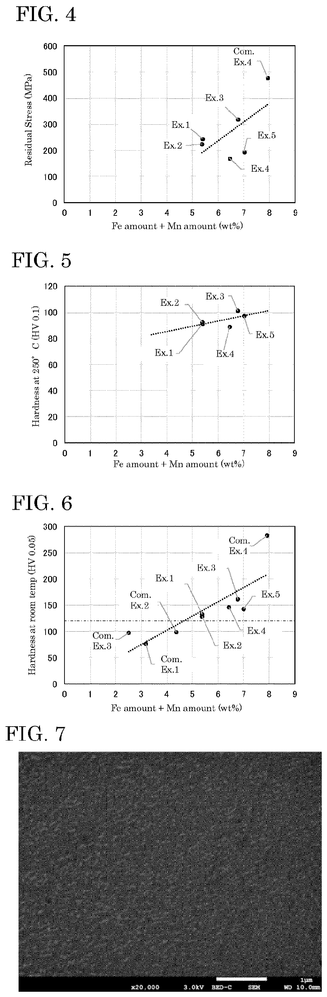

The relationship between the total content of Fe and Mn and the residual stress in the molten solidification portion of the aluminum alloy is shown in FIG. 4. The proportional relationship is observed between the total content of Fe and Mn and the residual stress, and by setting the total content of Fe and Mn to 7.0% by mass or less, it is possible to set the residual stress to 400 MPa or less.

The relationship between the total content of Fe and Mn and the hardness of the molten solidification portion of the aluminum alloy at 250°C is shown in FIG. 5. When the total content of Fe and Mn increases, the hardness at 250°C increases, and in order to achieve the hardness of 80 HV or more at 250°C, it is necessary to set the total content of Fe and Mn to 4.0% by mass or more.

The relationship between the total content of Fe and Mn and the hardness at room temperature (without heat treatment) of the molten solidification portion of the aluminum alloy is shown in FIG. 6. The hardness at room temperature of the molten solidification portion of the aluminum alloy increases with the increase in the total content of Fe and Mn, and by setting the total content of Fe and Mn to 5.0% by mass or more, the hardness at room temperature of the molten solidification portion of the aluminum alloy can be set to 120 HV or more.

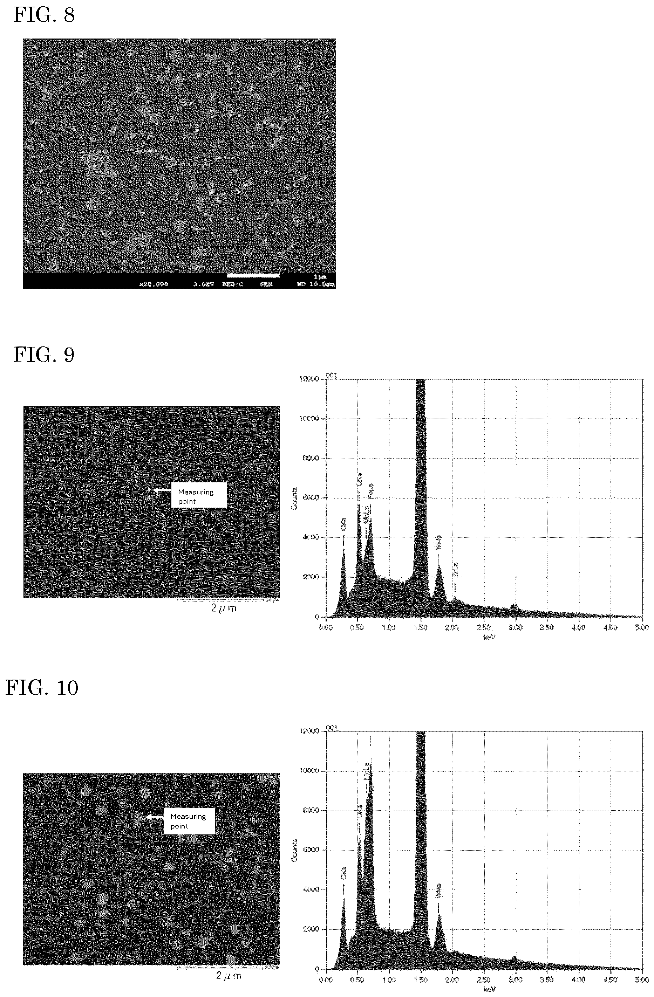

As for the observation results of the molten solidification portion (without heat treatment) obtained by using the bulk material made of the aluminum alloy having the composition shown in Example 2 as the raw material, the microstructure at the melt pool center is shown in FIG. 7, and the microstructure at the melt pool boundary is shown in FIG. 8, respectively. At the melt pool center, extremely fine AlFeMn-based compounds with particle sizes of 100 nm or less are uniformly and abundantly dispersed, and the distance between adjacent compounds is 200 nm or less. On the other hand, coarsening of AlFeMn-based compounds is observed at the melt pool boundary.

As for the observation results of the molten solidification portion (without heat treatment) obtained by using the bulk material made of the aluminum alloy having the composition shown in Example 2 as the raw material, the EDS spectrum and measurement points obtained from the melt pool center are shown in FIG. 9. The peak due to Zr was detected in addition to the peaks due to Al, Fe, and Mn, and it is understood that in addition to the AlFeMn-based compounds, fine AlZr-based compounds that are difficult to observe with a scanning electron microscope are dispersed. As for the observation results of the molten solidification portion (without heat treatment) obtained by using the bulk material made of the aluminum alloy having the composition shown in Example 2 as the raw material, the EDS spectrum and measurement points obtained from the melt pool boundary are shown in FIG. 10. The peaks due to Fe and Mn are strong, and it is understood that the particles present in this region are the AlFeMn-based compounds.

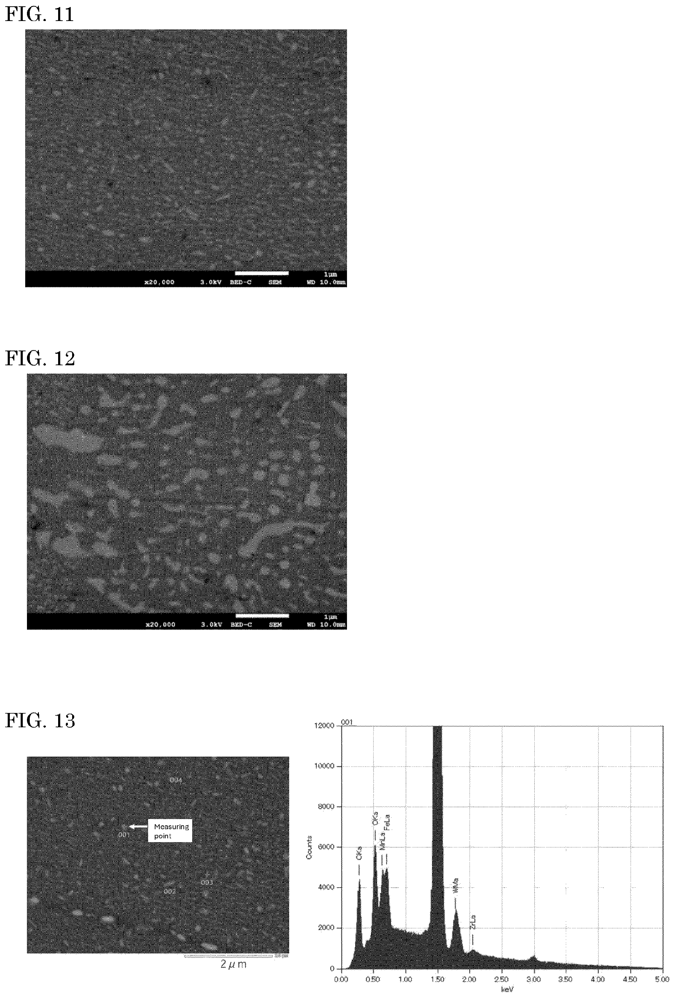

As for the observation results of the molten solidification portion (after heat treatment at 400°C for 1 hour) obtained by using the bulk material made of the aluminum alloy having the composition shown in Example 2 as the raw material, the microstructure at the melt pool center is shown in FIG. 11, and the microstructure at the melt pool boundary is shown in FIG. 12, respectively. Although the compounds are slightly coarsened by the heat treatment, at the melt pool center, extremely fine compounds are uniformly and abundantly dispersed, and the distance between adjacent compounds is 200 nm or less.

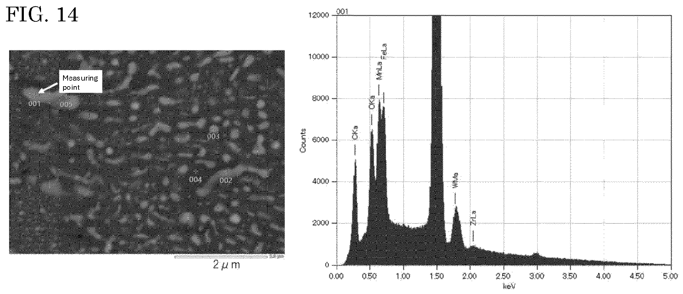

As for the observation results of the molten solidification portion (after heat treatment at 400°C for 1 hour) obtained by using the bulk material made of the aluminum alloy having the composition shown in Example 2 as the raw material, the EDS spectrum and measurement points obtained from the melt pool center are shown in FIG. 13. The peak due to Zr was detected in addition to the peaks due to Al, Fe, and Mn, and it is understood that in addition to the AlFeMn-based compounds, fine AlZr-based compounds that are difficult to observe with a scanning electron microscope are dispersed. As for the observation results of the molten solidification portion (after heat treatment at 400°C for 1 hour) obtained by using the bulk material made of the aluminum alloy having the composition shown in Example 2 as the raw material, the EDS spectrum and measurement points obtained from the melt pool boundary are shown in FIG. 14. The peaks due to Fe and Mn are strong, and it is understood that the particles present in this region are the AlFeMn-based compounds.

### EXPLANATION OF SYMBOLS

- 2: Aluminum alloy molded body,
- 4: Melt pool.

## Claims

1. An aluminum alloy molded body molded by a lamination molding method, and
the aluminum alloy molded body is **characterized by**:
comprising an aluminum alloy which contains:
Fe: more than 2.0% by mass and not more than 5.0% by mass;
Mn: more than 2.0% by mass and not more than 5.0% by mass;
Zr: more than 0% by mass and not more than 1.5% by mass;
with the remainder being Al and unavoidable impurities;
the total content of Fe and Mn being 4.0 to 7.0% by mass; and
having a metallographic structure comprising a matrix phase (Al), an AlFeMn-based compound and an AlZr-based compound.

2. The aluminum alloy molded body according to claim 1, wherein a Vickers hardness at 250°C is 80 HV or more.

3. The aluminum alloy molded body according to claim 1 or 2, wherein a Vickers hardness at room temperature is 120 HV or more.

4. The aluminum alloy molded body according to claim 1 or 2, wherein an average spacing between the AlFeMn-based compounds in the region excluding the melt pool boundary is 200 nm or less.

5. A method for producing an aluminum alloy molded body, which is **characterized by** including,
a lamination molding step of molding an aluminum alloy material by a lamination molding method to obtain an aluminum alloy laminated molded body; and
a heat treatment step of holding the aluminum alloy laminated molded body at 300 to 400°C to reduce residual stress,
wherein the aluminum alloy material contains:
Fe: more than 2.0% by mass and not more than 5.0% by mass;
Mn: more than 2.0% by mass and not more than 5.0% by mass;
Zr: more than 0% by mass and not more than 1.5% by mass;
with the remainder being Al and unavoidable impurities; and
the total content of Fe and Mn being 4.0 to 7.0% by mass.
